# EUROPÄISCHE PATENTSCHRIFT

(11) **EP 4 294 229 B1**
(45) Veröffentlichungstag und Bekanntmachung des Hinweises auf die Patenterteilung: **11.03.2026**
(21) Anmeldenummer: 22701219.2
(22) Anmeldetag: 19.01.2022
(51) Int. Cl.: A44C 9/00, G06K 19/077

(54) **SCHMUCKRING MIT RFID-TRANSPONDER UND AUSLESEANORDNUNG**
JEWELRY RING HAVING A RFID TRANSPONDER AND A READING ARRANGEMENT
BAGUE DE BIJOUTERIE COMPORTANT UN TRANSPONDEUR RFID ET UN SYSTÈME DE LECTURE

(30) Priorität: 17.02.2021 DE 202021100768 U
(43) Veröffentlichungstag der Anmeldung: 27.12.2023
(73) Patentinhaber: egf - Eduard G.Fidel GmbH, 75179 Pforzheim (DE)
(72) Erfinder: SCHIFFER, Stefan, 75239 Eisingen (DE); BINDER, Kai-F., 75173 Pforzheim (DE)
(74) Vertreter: Wacker, Jost Oliver
(86) Internationale Anmeldenummer: PCT/EP2022/051076
(87) Internationale Veröffentlichungsnummer: WO 2022/175005

(56) Entgegenhaltungen:
- EP-A1- 2 597 723
- WO-A1-2018/020055
- US-A1- 2019 053 055

## Beschreibung

Die Erfindung betrifft einen Schmuckring, wie beispielsweise einen Schmuckfingerbeziehungsweise Ehering, nach dem Oberbegriff des Anspruchs 1. Dabei weist der Schmuckring einen Metallgrundkörper auf, der beispielsweise aus Edelmetall, wie insbesondere einer Gold-, Silber- und/oder Platinlegierung gebildet ist und eine Aufsteckaufnahme zur Festlegung des Schmuckringes an einem Finger des Trägers bildet. Zudem ist an dem Schmuckring ein RFID-Transponder vorgesehen, an dem auslesbare Daten hinterlegt sind, die beispielsweise zur Identifikation des Benutzers dienen oder Zugangs- beziehungsweise Zugriffsrechte umfassen, wie beispielsweise zum Öffnen von Türen oder für den Zugriff auf Computersysteme. Hierzu ist der RFID-Transponder mit einer Antennenstruktur verbunden beziehungsweise weist selbst eine integrierte Antennenstruktur auf, über die Signale von einem Auslesegerät ausgetauscht werden können.

Aus EP2597723A1 ist ein Schmuckring bekannt, an dem ein RFID-Transponder in einer Ausnehmung eines Metallgrundkörpers aufgenommen ist, die in eine Außenseite eingelassen ist. Dabei ist der RFID-Transponder nach außen hin wenigstens teilweise von einem am Metallgrundkörper angeordneten amorphen Zierelement abgedeckt.

WO 2018/020055 A1 beschreibt einen Ring für eine Nahfeldkommunikation (NFC) über dessen Außenseite. Der Ring weist hierzu eine Außenschale auf, an deren Innenseite eine ringförmige Dichtung eingesetzt werden kann. Zwischen der Außenschale und der Dichtung wird dabei eine ringförmige Aufnahme gebildet, in der ein mit einer Antennenstruktur verbundener NFC-Chip eingesetzt ist.

Eine derartige Anordnung eines RFID-Transponders ermöglicht eine einfache Datenübertragung zwischen einem Chip des RFID-Transponders durch ein außerhalb des Schmuckringes angeordneten Aktivierungs-/Lesegerätes, um entsprechende Daten am Chip zu hinterlegen und/oder bereits hinterlegte Daten auslesen zu können. Hierdurch kann mit dem RFID-Transponder beispielsweise ein Code zum Öffnen eines elektronischen Schlosses an einem Schmuckring gespeichert und von außen durch ein Auslesegerät ausgelesen werden. Auf diese Weise kann ein am Finger getragener Schmuckring an ein Schloss, wie beispielsweise einer Gebäude- oder Autotür gehalten werden, um diese zu öffnen.

Über derartige Verwendungen eines Schmuckstückes mit einem leicht auslesbaren RFID-Transponder hinaus, besteht am Markt ein Bedarf an Schmuckringen, die eine besonders sichere Speicherung von Daten beziehungsweise Codes gewährleisten, wie beispielsweise Codes, die einen Zugriff auf ein Bankkonto oder Kryptowährungen erlauben. Für derartige Anwendungen sind die bekannten Schmuckringe nicht geeignet, da sie in erster Linie für ein komfortables und einfaches Öffnen von Zugängen konzipiert sind und die hinterlegten Daten hierzu relativ einfach auslesbar sein müssen. Hierbei besteht insbesondere die Gefahr, dass durch bloße Positionierung eines Lesegerätes an einem von einem Benutzer getragenen Schmuckstück, die gespeicherten Daten auch von nicht autorisierten Personen ausgelesen werden könnten, die dadurch einen Zugriff auf die betreffenden Konten oder Kryptowährungen bekämen.

Die Aufgabe der Erfindung ist es, bei einem gattungsgemäßen Schmuckring die genannten Nachteile zu vermeiden und einen unbefugten Zugriff auf die hinterlegten Daten zuverlässig zu vermeiden.

Diese Aufgabe wird durch einen Schmuckring mit den Merkmalen des Anspruchs 1 gelöst. Dabei ist der RFID-Transponder am Metallgrundkörper innenseitig angeordnet, wobei er in einer Transponderaufnahme aufgenommen ist, die durch eine in eine Innenseite des Metallgrundkörpers eingelassene sacklochförmige Bohrung gebildet ist und der Metallgrundkörper den RFID-Transponder durch eine geschlossene Außenseite nach außen geschlossen abschirmt, wodurch eine Datenübertragung vom RFID-Transponder auf ein außerhalb des Ringes angeordnetes Auslesegerät und umgekehrt eine Übertragung von einem außerhalb des Ringes angeordneten Sendegerätes auf den RFID-Transponder vollständig blockiert werden kann. Hierdurch ist es möglich, den Schmuckring derart zu gestalten, dass der RFID-Transponder lediglich von seiner Innenseite ausgelesen werden kann. Dadurch sind die am RFID-Transponder gespeicherten Daten während des Tragens des Schmuckrings am Finger zuverlässig gegen Auslesen gesichert. Dabei kann sowohl ein Auslesen als auch eine Manipulation der am RFID-Transponder hinterlegten Daten während des Tragens des Schmuckringes zuverlässig verhindert werden.

Dabei wird durch die Aufnahme des RFID-Transponders in der in eine Innenseite des Metallgrundkörpers eingelassenen Transponderaufnahme eine stabile Befestigung und eine sichere Abschirmung des RFID-Transponders nach außen möglich. Die Transponderaufnahme kann dabei bereits bei Herstellung des Schmuckringes beziehungsweise des Metallgrundkörpers vorgesehen sein oder alternativ auch erst bei Bedarf in einen bereits bestehenden Schmuckring eingearbeitet werden.

Durch die Ausbildung der Transponderaufnahme durch eine sacklochförmige Bohrung kann dabei eine besonders stabile Befestigung und eine besonders gute Abschirmung nach außen gewährleistet werden. Zudem kann auf diese Weise die innenseitige Anordnung des RFID-Transponders relativ einfach auch noch nachträglich an einem Schmuckring umgesetzt werden.

Zudem ist es günstig, wenn die Transponderaufnahme nutförmig ausgebildet ist, was die Befestigung des RFID-Transponders in beliebiger umlaufender Position an der Innenseite des Ringes erlaubt. Zudem ermöglicht die nutförmige Ausbildung der Transponderaufnahme bei Bedarf auch die Aufnahme wenigstens eines weiteren RFID-Transponders.

Vorteilhafterweise ist wenigstens ein weiterer RFID-Transponder innenseitig am Metallgrundkörper aufgenommen. Auf diese Weise kann der Bereich, in dem ein zuverlässige Datenübertragung an der Innenseite des Schmuckringes möglich ist, vergrößert werden, um die gespeicherten Daten sicher auslesen zu können. Insbesondere die nutförmige Ausbildung der Transponderaufnahme ermöglicht dabei die innenseitige Befestigung wenigstens eines weiteren RFID-Transponders beziehungsweise die umlaufende Anordnung eines Transponder-Arrays. Dabei sind die auslesbaren Daten an den vorgesehenen RFID-Transpondern vorteilhafterweise redundant hinterlegt, so dass die betreffenden Daten bei fehlender Auslesbarkeit eines einzelnen RFID-Transponders durch den wenigstens einen weiteren RFID-Transponder beziehungsweise die übrigen RFID-Transponder des Transponder-Arrays zur Verfügung gestellt werden können.

Zudem ist es günstig, wenn der wenigstens eine RFID-Transponder als passiver Transponder ausgebildet ist, so dass dieser ohne eigene Stromversorgung und somit zeitlich nahezu unbegrenzt zur Verfügung steht. Der passive RFID-Transponder kann dadurch jederzeit durch ein elektromagnetisches Feld eines externen Lesegerätes aktiviert werden, um die auslesbaren Daten zu übergeben beziehungsweise zur Verfügung zu stellen.

Von Vorteil ist es ferner, wenn der wenigstens eine RFID-Transponder eine in ein Chipgehäuse intergierte Nahfeldantenne aufweist. Derartige Antennen können hierbei mit einer relativ geringen Größe zur Verfügung gestellt werden, wodurch sie besonders einfach in den Schmuckring integriert werden können. Zudem kann durch die Verwendung einer Nahfeldantenne, die lediglich in einem Abstand von maximal 2 cm eine Kommunikation des RFID-Transponders mit einem Auslesegerät ermöglicht, ein Auslesen durch unberechtigte Dritte beziehungsweise eine unbeabsichtigte Zurverfügungstellung der auslesbaren Daten wirksam vermieden werden.

Zudem ist es günstig, wenn der RFID-Transponder kontaktfrei beabstandet zum Metallgrundkörper gehalten ist, wodurch eine störungsfreie Datenübertragung gewährleistet werden kann.

In einer besonders vorteilhaften Ausführungsform ist der RFID-Transponder zur Aufsteckaufnahme hin durch ein nichtmetallisches Material abgedeckt, das die Transponderaufnahme wenigstens teilweise verschließt. Hierdurch ist es möglich, den RFID-Transponder beziehungsweise dessen Antennenstruktur zumindest weitestgehend uneinsehbar und geschützt in der Transponderaufnahme aufzunehmen, ohne dass es zu wesentlichen Störungen beim Auslesen der gespeicherten Daten kommt. Die nichtmetallischen Materialien können dabei als zusätzliches gestalterisches Element an der Innenseite des Schmuckringes genutzt werden, so dass das Design und der wertige Gesamteindruck des Schmuckringes trotz des daran aufgenommenen wenigstens einen RFID-Transponders erhalten werden kann.

Dabei ist es günstig, wenn das nichtmetallische Material wenigstens teilweise durch eine Karbonfaserstruktur, einen Lack oder eine Keramik gebildet ist. Hierdurch kann die Verminderung der Sende- und Empfangsleistung der RFID-Transponder durch das abdeckende Material auf ein Minimum begrenzt werden. Zudem kann durch die Verwendung dieser Materialien ein besonders wirksamer Schutz der RFID-Transponder gegenüber mechanisch oder chemisch wirkenden Beaufschlagungen zur Verfügung gestellt werden, die beispielsweise durch Stöße, Verkantungen oder eintretende Fluide hervorgerufen werden.

Alternativ oder zusätzlich hierzu kann das nichtmetallische Material vorteilhafterweise wenigstens teilweise durch einen Schmuckstein gebildet sein, der aus einem kristallinen oder amorphen Material gebildet ist. Insbesondere können die Schmucksteine durch ein monokristallines Material gebildet sein, insbesondere durch Zirkonia. Durch die Verwendung von kristallinen oder amorphen Steinen beziehungsweise von Zirkonia-Steinen kann der wenigstens eine RFID-Transponder auch bei hochwertigen Schmuckgegenständen, wie beispielsweise mit Edelsteinen besetzte Edelmetallringen, besonders unauffällig abgedeckt und integriert werden.

Ferner wird die oben genannte Aufgabe durch eine Ausleseanordnung mit einem Schmuckring in einer der oben beschriebenen Ausführungsformen und einem Auslesegerät für einen Datenaustausch mit dem RFID-Transponder des Schmuckrings gelöst, wobei das Auslesegerät einen in die Aufsteckaufnahme einführbaren Lesebereich mit Empfangsmitteln zum Auslesen von Daten des RFID-Transponders aufweist. Während die am RFID-Transponders gespeicherten Daten aufgrund der Abschirmung nach außen und die begrenzte Reichweite der Nahfeldantenne nach innen gegen unberechtigten Zugriff sicher geschützt sind, solange der Schmuckring am Finger getragen wird, kann der Schmuckring zum Auslesen der Daten vom Finger abgenommen und auf den Lesebereich des Auslesegerätes aufgesteckt werden. In diesem sind die Empfangsmittel derart angeordnet, dass der wenigstens eine RFID-Transponder im aufgesteckten Zustand des Schmuckringes ausreichend nahe an den Empfangsmitteln positioniert werden kann, um eine ungestörte Datenübertragung zu ermöglichen. Im Falle eines passiven RFID-Transponders wird hierbei von Aktivierungsmitteln des Auslesegerätes ein Aktivierungssignal mit einer Aktivierungs- und Empfangsfrequenz an den Schmuckgegenstand gesendet, wobei eine elektromagnetisches Wechselfeld erzeugt wird. Die Frequenzenergie dieses elektromagnetischen Wechselfeldes dient dabei als Stromversorgung des passiven RFID-Chips während des Kommunikationsvorganges, bei dem die an diesem hinterlegten Daten an die Empfangsmittel des Auslesegerätes übergeben werden.

In einer weiteren vorteilhaften Ausführungsform ist der Schmuckring auf den Lesebereich aufsteckbar, um eine sichere Positionierung des wenigstens einen RFID-Transponders gegenüber den Aktivierungsmitteln und der Empfangsmittel des Auslesegerätes zu ermöglichen.

Ferner ist es günstig, wenn hierbei in Aufsteckrichtung ein dem Lesebereich vorgelagerter Verjüngungsabschnitt vorgesehen ist, um ein leichteres Aufstecken auf dem Auslesegerät zu ermöglichen.

Dabei ist es besonders bevorzugt, wenn an dem Schmuckring und dem Auslesegerät eine Ausrichtungsanordnung vorgesehen ist, mittels der der Schmuckring in einer vorbestimmten Drehposition am Lesebereich positioniert werden kann, in der der RFID-Transponder benachbart zu den Empfangsmitteln des Lesebereichs angeordnet ist. Die Ausrichtungsanordnung kann dabei beispielsweise Ausrichtungsmittel aufweisen, die durch eine Innenkontur und/oder eine Außenkontur des Schmuckringes beziehungsweise von dessen Metallgrundkörper gebildet sind. Diese Ausrichtungsmittel wirken zusammen mit entsprechenden, insbesondere komplementären Ausrichtungsgegenmitteln, die am Auslesegerät ausgebildet sind. Diese Ausrichtungsmittel und Ausrichtungsgegenmittel sind dabei derart angeordnet, dass der Schmuckring über eine Aufsteckbewegung hinweg derart ausgelenkt wird, dass er bei Erreichen einer End- beziehungsweise Anschlagstellung am Auslesegerät eine vorbestimmte Drehposition am Lesebereich einnimmt, in der der RFID-Transponder benachbart zu den Empfangsmitteln angeordnet ist.

Es wird darauf hingewiesen, dass alle oben beschriebenen Merkmale des erfindungsgemäßen Gegenstandes untereinander austauschbar beziehungsweise kombinierbar sind, sofern ein Austausch oder eine Kombination derselben aus technischen Gründen nicht ausgeschlossen ist.

In den Figuren ist eine beispielhafte Ausführungsform der Erfindung dargestellt. Es zeigen:
- Figur 1: eine perspektivische Ansicht eines erfindungsgemäßen Schmuckringes mit RFID-Transponder,
- Figur 2: einen Schnitt durch den Schmuckring gemäß Figur 1 in Ebene II-II,
- Figur 3: eine perspektivische Ansicht einer alternativen Ausführungsform des Schmuckringes,
- Figur 4: einen Schnitt durch den Schmuckring gemäß Figur 3 in Ebene IV-IV,
- Figur 5: eine perspektivische Ansicht einer Ausleseanordnung mit dem Schmuckring und einem Auslesegerät im getrennten Zustand und
- Figur 6: eine perspektivische Ansicht der Ausleseanordnung im zusammengesteckten Zustand.

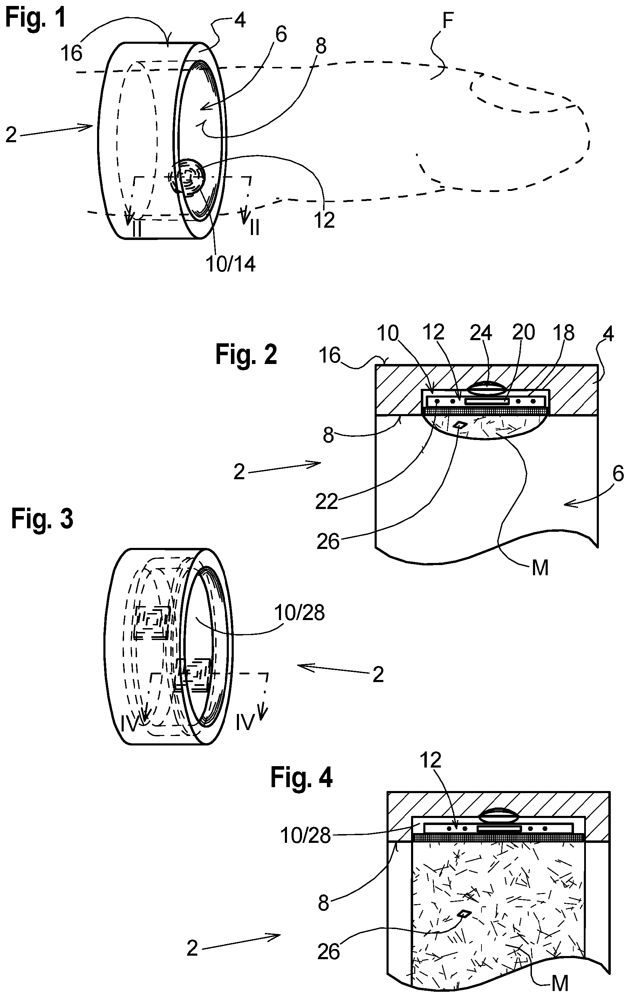

Die Figuren Fig. 1 und 2 zeigen einen Schmuckring 2 in Form eines Schmuckfingerringes mit einem Metallgrundkörper 4, der eine Aufsteckaufnahme 6 bildet, mittels der der Schmuckring 2 auf einen Finger F aufgesteckt werden kann. Der Metallgrundkörper 4 ist dabei insbesondere durch Edelmetall gebildet, wie insbesondere durch eine Gold-, Silber- und/oder Platinlegierung.

An einer die Aufsteckaufnahme 6 begrenzenden Innenseite 8 weist der Metallgrundkörper 4 eine Transponderaufnahme 10 auf, die zur Befestigung eines RFID-Transponders 12 dient. Die Transponderaufnahme 10 kann dabei, wie dargestellt, durch eine in die Innenseite 8 eingelassene sacklochförmige Bohrung 14 gebildet sein. Hierdurch ist der darin aufgenommene RFID-Transponder 12 durch eine geschlossene Außenseite 16 des Metallgrundkörpers 4 nach außen hin abgeschirmt.

Der RFID-Transponder 12 ist dabei als passiver Transponder mit einem Chipgehäuse 18 ausgebildet, in dem ein Speicherchip 20 und eine Antennenstruktur 22 aufgenommen sind. Der Speicherchip 20 dient dabei zum Speichern von Daten, wie insbesondere Identifikations- oder Zugangsdaten beziehungsweise Codes, wie beispielsweise Zugangscodes für Bankkonten oder Kryptowährungen. Die Antennenstruktur 22 bildet vorzugsweise eine Nahfeldantenne, deren Reichweite sich ausschließlich in die Aufsteckaufnahme 6 hinein erstreckt und dabei maximal 2 cm beträgt.

Wie insbesondere aus Figur 2 zu entnehmen ist, ist der RFID-Transponder 12 in der Transponderaufnahme 10 beabstandet zum Metallgrundkörper 4 gehalten, wie beispielsweise mittels eines Klebemittels 24. Zudem ist der RFID-Transponder 12 zur Aufsteckaufnahme 6 hin von einem nichtmetallischen Material M abgedeckt, das die Transponderaufnahme 10 verschließt. Dabei kann das nichtmetallische Material M wenigstens teilweise durch eine Karbonfaserstruktur, einen Lack oder eine Keramik gebildet sein. Alternativ oder zusätzlich hierzu kann das die Transponderaufnahme verschließende, nichtmetallische Material M auch durch einen Schmuckstein 26 gebildet sein.

Die Figuren 3 und 4 zeigen eine alternative Ausführungsform des Schmuckringes 2, bei der die Transponderaufnahme 10 durch eine in die Innenseite 8 eingelassene, insbesondere umlaufende Nut 28 gebildet ist. Dies ermöglicht die Aufnahme wenigstens eines weiteren RFID-Transponders 12 beziehungsweise eines beispielsweise umlaufend angeordneten Transponder-Arrays. Alternativ zur Aufnahme der wenigstens zwei RFID-Transponder 12 in der gemeinsamen Nut 28 können auch zwei oder mehr Bohrungen 14 in die Innenseite 8 eingelassen sein.

Sowohl die wenigstens eine Bohrung 14 als auch die Nut 28 können dabei bereits bei Herstellung des Schmuckringes 2 vorgesehen sein oder auch erst nachträglich in einen bestehenden Schmuckring 2 eingebracht werden, wie beispielsweise durch Bohren oder Fräsen.

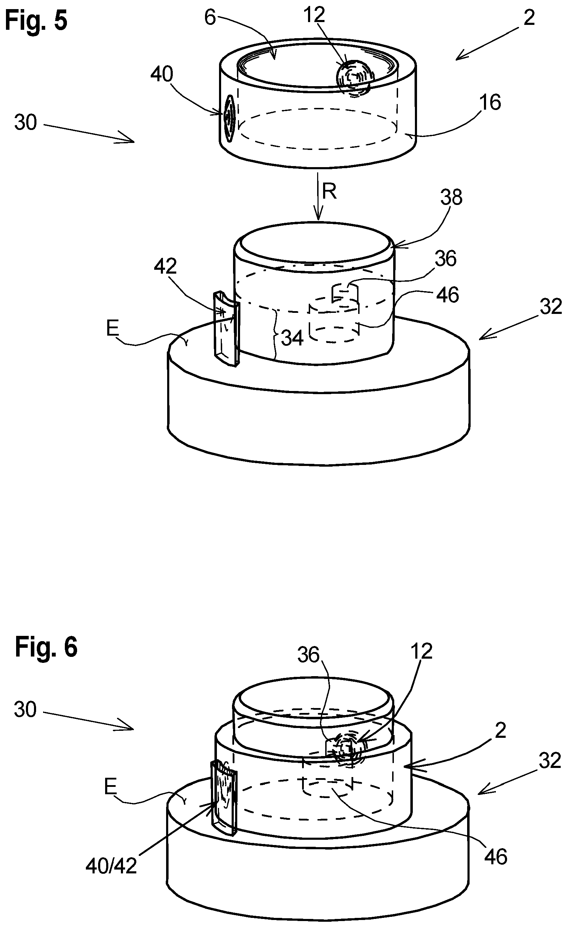

Die Figuren 5 und 6 zeigen eine Ausleseanordnung 30 mit dem Schmuckring 2 und einem Auslesegerät 32, das zur Kommunikation mit dem RFID-Transponder 12 vorgesehen ist.

Das Auslesegerät 32 ist dabei in einem Teil derart geformt, dass der Schmuckring 2 entlang einer Aufsteckrichtung R daran aufgesteckt und an einen Endanschlag E angelegt werden kann, der benachbart zu einem Lesebereich 34 ausgebildet ist. In diesem Lesebereich 34 sind hierbei Empfangsmittel 36 untergebracht, mittels denen der RFID-Transponder 12 ausgelesen werden kann.

Um in Aufsteckrichtung R ein leichteres Aufstecken des Schmuckringes 2 zu ermöglichen, ist am Auslesegerät 32 zudem ein dem Lesebereich vorgelagerter Verjüngungsabschnitt 38 vorgesehen.

Zudem können am Schmuckring 2 Ausrichtungsmittel 40, wie beispielsweise konturgebende Bereiche an der Außenseite 16 vorgesehen sein, die in einer vorgesehenen Drehposition des Schmuckringes 2 gegenüber dem Auslesegerät 32 mit beispielsweise komplementär ausgebildeten Ausrichtungsgegenmitteln 42 in Interaktion gebracht werden können. Beim Zusammenwirken der Ausrichtungsmittel 40 und Ausrichtungsgegenmittel 42 kann der Schmuckring 2 bei Erreichen des Endanschlages E in eine vorbestimmte Drehposition verbracht beziehungsweise in dieser gehalten werden, in der der wenigstens eine RFID-Transponder 12 benachbart zu den Empfangsmitteln 36 angeordnet ist, wie in Figur 6 dargestellt.

In dieser vorbestimmten Endanschlagstellung kann nun über Aktivierungsmittel 46 des Auslesegerätes 32 ein elektromagnetisches Wechselfeld erzeugt werden, das den RFID-Transponder 12 aktiviert, so dass die an diesem hinterlegten Daten an die benachbarten Empfangsmittel 36 des Auslesegerätes 32 übergeben werden können. Über das Auslesegerät 32 können die Daten dann weiterverwendet werden, um dem Benutzer den betreffenden Zugriff zu gewähren, wie beispielsweise auf ein Bankkonto oder eine Kryptowährung.

Es wird darauf hingewiesen, dass alle oben beschriebenen Elemente und Merkmale der verschiedenen Ausführungsformen des erfindungsgemäßen Gegenstandes untereinander austauschbar beziehungsweise kombinierbar sind, sofern ein Austausch oder eine Kombination derselben aus technischen Gründen nicht ausgeschlossen ist, die Erfindung wird durch die Ansprüche definiert.

## Patentansprüche

1. Schmuckring (2), wie insbesondere am Finger (F) getragener Schmuckfingerring, mit einem Metallgrundkörper (4), der eine Aufsteckaufnahme (6) bildet, und einem RFID-Transponder (12), an dem auslesbare Daten hinterlegt sind und der eine Antennenstruktur (22) aufweist, über die Signale an ein Auslesegerät (32) übertragbar sind,
wobei, der RFID-Transponder (12) am Metallgrundkörper (4) innenseitig angeordnet ist, **dadurch gekennzeichnet, dass** der RFID transponder (12) in einer Transponderaufnahme (10) aufgenommen ist, die durch eine in eine Innenseite (8) des Metallgrundkörpers (4) eingelassene sacklochförmige Bohrung (14) gebildet ist und der Metallgrundkörper (4) den RFID-Transponder (12) hierdurch nach außen durch eine geschlossene Außenseite (16) abschirmt.

2. Schmuckring nach Anspruch 1, **dadurch gekennzeichnet, dass** die Transponderaufnahme (10) nutförmig ausgebildet ist.

3. Schmuckring nach Anspruch 1 oder 2, **dadurch gekennzeichnet, dass** wenigstens ein weiterer RFID-Transponder (12) innenseitig am Metallgrundkörper (4) aufgenommen ist.

4. Schmuckring nach einem der Ansprüche 1 bis 3, **dadurch gekennzeichnet, dass** der wenigstens eine RFID-Transponder (12) als passiver Transponder ausgebildet ist.

5. Schmuckring nach einem der Ansprüche 1 bis 4, **dadurch gekennzeichnet, dass** der RFID-Transponder (12) eine in ein Chipgehäuse (18) intergierte Nahfeldantenne aufweist.

6. Schmuckring nach einem der Ansprüche 1 bis 5, **dadurch gekennzeichnet, dass** der RFID-Transponder (12) kontaktfrei beabstandet zum Metallgrundkörper (4) gehalten ist.

7. Schmuckring nach einem der Ansprüche 1 bis 6, **dadurch gekennzeichnet, dass** der RFID-Transponder (12) zur Aufsteckaufnahme (6) hin durch ein nichtmetallisches Material (M) abgedeckt ist, das die Transponderaufnahme (10) wenigstens teilweise verschließt.

8. Schmuckring nach Anspruch 7, **dadurch gekennzeichnet, dass** das nichtmetallische Material (M) wenigstens teilweise durch eine Karbonfaserstruktur, einen Lack oder eine Keramik gebildet ist.

9. Schmuckring nach Anspruch 7 oder 8, **dadurch gekennzeichnet, dass** das nichtmetallische Material (M) wenigstens teilweise durch einen Schmuckstein (26) gebildet ist.

10. Ausleseanordnung mit einem Schmuckring nach einem der Ansprüche 1 bis 9 und einem Auslesegerät für einen Datenaustausch mit dem RFID-Transponder des Schmuckrings, **dadurch gekennzeichnet, dass** das Auslesegerät (32) einen in die Aufsteckaufnahme (6) einführbaren Lesebereich (34) mit Empfangsmitteln (36) zum Auslesen von Daten des RFID-Transponders (12) aufweist.

11. Ausleseanordnung nach Anspruch 10, **dadurch gekennzeichnet, dass** der Schmuckring (2) auf den Lesebereich (34) aufsteckbar ist.

12. Ausleseanordnung nach Anspruch 11, **dadurch gekennzeichnet, dass** in Aufsteckrichtung einer (R) ein dem Lesebereich (34) vorgelagerter Verjüngungsabschnitt (38) vorgesehen ist.

13. Ausleseanordnung nach einem der Ansprüche 10 bis 12, **dadurch gekennzeichnet, dass** an dem Schmuckring (3) und dem Auslesegerät (32) eine Ausrichtungsanordnung vorgesehen ist, mittels der der Schmuckring (2) in einer vorbestimmten Drehposition am Lesebereich (34) positionierbar ist, in der der RFID-Transponder (12) benachbart zu den Empfangsmitteln (36) des Lesebereichs (34) angeordnet ist.

## Claims

1. Jewelry ring (2), such as jewelry finger ring worn on the finger (F),
with a metal base body (4), which forms a put-on reception (6), and
an RFID transponder (12) on which readable data are stored and which has an antenna structure (22) via which signals can be transmitted to a readout device (32),
wherein the RFID transponder (12) is arranged on the inside of the metal base body (4), **characterized in that** the RFID transponder (12) is accommodated in a transponder holder (10), which is formed by a blind hole-shaped hole (14) inserted in an inside (8) of the metal base body (4) and the metal base body (4) thereby shields the RFID transponder (12) from the outside by a closed outside (16).

2. Jewelry ring according to claim 1, **characterized in that** the transponder holder (10) is groove-shaped.

3. Jewelry ring according to claim 1 or 2, **characterized in that** at least one further RFID transponder (12) is taken up on the inside of the metal base body (4).

4. Jewelry ring according to any one of claims 1 to 3, **characterized in that** at least one RFID transponder (12) is designed as a passive transponder.

5. Jewelry ring according to any one of claims 1 to 4, **characterized in that** the RFID transponder (12) has a near-field antenna integrated into a chip housing (18).

6. Jewelry ring according to any one of claims 1 to 5, **characterized in that** the RFID transponder (12) is kept contact-free at a distance from the metal base body (4).

7. Jewelry ring according to any one of claims 1 to 6, **characterized in that** the RFID transponder (12) towards the put-on reception (6) is covered by a non-metallic material (M) which at least partially closes the transponder holder (10).

8. Jewelry ring according to claim 7, **characterized in that** the non-metallic material (M) is at least partly formed by a carbon fibre structure, varnish or ceramic.

9. Jewelry ring according to claim 7 or 8, **characterized in that** the non-metallic material (M) is at least partly formed by a gemstone (26).

10. Readout arrangement comprising a jewelry ring according to any one of claims 1 to 9 and a readout apparatus for data exchange with the RFID transponder of the jewelry ring, **characterized in that** the readout device (32) has a reading area (34) with receiving means (36) for reading data from the RFID transponder (12) which can be inserted into the put-on reception (6).

11. Readout arrangement according to claim 10, **characterized in that** the jewelry ring (2) can be attached to the reading area (34).

12. Readout arrangement according to claim 11, **characterized in that** a taper section (38) is provided in the attachment direction of one (R) upstream of the reading area (34).

13. Readout arrangement according to any one of claims 10 to 12, **characterized in that** an alignment arrangement is provided on the jewelry ring (2) and the readout device (32) by means of which the jewelry ring (2) can be positioned in a predetermined rotation position on the reading area (34) in which the RFID transponder (12) is arranged adjacent to the receiving means (36) of the reading area (34).

## Revendications

1. Bague de bijou (2), comme la bague de doigt portée au doigt (F),
avec un corps métallique de base (4), qui forme un réceptacle de plugiciel (6), et
un transpondeur RFID (12) sur lequel des données lisibles sont stockées et qui possède une structure d'antenne (22) via laquelle les signaux peuvent être transmis au appareil de lecture (32),
où le transpondeur RFID (12) est disposé à l'intérieur du corps métallique de base (4), **caractérisé par le fait que** le transpondeur RFID (12) est logé dans un porte-transpondeur (10), formé par un trou aveugle en forme de trou (14) inséré dans l'intérieur (8) du corps métallique de base (4) et du corps métallique de base (4) protégeant ainsi le transpondeur RFID (12) de l'extérieur par un forage extérieur fermé (16).

2. Bague de bijoux selon la revendication 1, **caractérisée par le fait que** le porte-transpondeur (10) a une forme de rainure.

3. Bague de bijoux, selon la revendication 1 ou 2, **caractérisée par le fait qu'**au moins un autre transpondeur RFID (12) est pris à l'intérieur du corps métallique de base (4).

4. Bague de bijoux selon l'une des revendications 1 à 3, **caractérisée par le fait qu'**au moins un transpondeur RFID (12) est conçu comme un transpondeur passif.

5. Bague de bijoux selon l'une des revendications 1 à 4, **caractérisé par le fait que** le transpondeur RFID (12) possède une antenne de champ proche intégrée dans un boîtier de puce (18).

6. Bague de bijoux selon l'une des revendications 1 à 5, **caractérisée par le fait que** le transpondeur RFID (12) est maintenu sans contact à une distance du corps métallique de base (4).

7. Bague de bijoux selon l'une des revendications 1 à 6, **caractérisée par le fait que** le transpondeur RFID (12) vers le réceptacle de plugiciel (6) est recouvert d'un matériau non métallique (M) qui ferme au moins partiellement le porte-transpondeur (10).

8. Bague de bijou selon la revendication 7, **caractérisée par** le matériau non métallique (M) est au moins partiellement formé par une structure en fibre de carbone, un vernis ou une céramique.

9. Bague de bijou selon la revendication 7 ou 8, **caractérisée par** le matériau non métallique (M) est au moins partiellement formé par une pierre précieuse (26).

10. Dispositif de lecture comprenant une bague de bijoux selon l'une des revendications 1 à 9 et un appareil de lecture pour l'échange de données avec le transpondeur RFID de la bague, **caractérisé par le fait que** l'appareil de lecture (32) possède une zone de lecture (34) avec des moyens de réception (36) pour lire les données du transpondeur RFID (12) pouvant être insérées dans le réceptacle de plugiciel (6).

11. Disposition de lecture selon la revendication 10, **caractérisée par le fait que** la bague de bijou (2) peut être fixée à la zone de lecture (34).

12. Disposition de lecture selon la revendication 11, **caractérisée par le fait qu'**une section de conicité (38) est prévue dans la direction d'attache d'une (R) en amont de la zone de lecture (34).

13. Dispositif de lecture selon l'une des revendications 10 à 12, **caractérisé par le fait qu'**un dispositif d'alignement est prévu sur la bague de bijou (2) et l'appareil de lecture (32) par lequel la bague de bijou (2) peut être positionnée dans une position de rotation prédéterminée sur la zone de lecture (34) où le transpondeur RFID (12) est disposé à côté des moyens de réception (36) de la zone de lecture (34).
